Europäisches Patentamt

European Patent Office

Office européen des brevets

(19)

(11) Publication number: **0 026 634**
**B1**

(12) **EUROPEAN PATENT SPECIFICATION**

(45) Date of publication of patent specification: **14.03.84**

(21) Application number: **80303345.5**

(22) Date of filing: **24.09.80**

(51) Int. Cl.³: **F 21 V 21/36,**
**E 04 H 12/18,**
**F 16 M 11/38**

(54) Column for supporting a lamp.

(30) Priority: **24.09.79 GB 7933001**

(43) Date of publication of application:
**08.04.81 Bulletin 81/14**

(45) Publication of the grant of the patent:
**14.03.84 Bulletin 84/11**

(84) Designated Contracting States:
**AT BE CH DE FR IT LI LU NL SE**

(56) References cited:
**FR - A - 1 250 217**
**GB - A - 991 963**
**US - A - 2 645 511**

(73) Proprietor: PETITJEAN & COMPANY (UK) LIMITED
Teesside Industrial Estate Dukes Way
Thornaby Cleveland TS17 9LT (GB)

(72) Inventor: Golay, Paul Albert
Greenacres Appleton Whiske
Nr.Northallerton, North Yorkshire (GB)

(74) Representative: Barnard, Eric Edward et al,
BROOKES & MARTIN High Holborn House 52/54
High Holborn
London WC1V 6SE (GB)

Courier Press, Leamington Spa, England.

# Column for supporting a lamp

The present invention relates to a column for supporting a lamp or other unit and particularly to that type of column having a base section for mounting to the ground a tiltable section, the tiltable section being hinged adjacent the top of the base section. The provision of a tiltable section is normally for the purpose of facilitating the cleaning of the lamp or other unit carried at the top of the tiltable section. Such columns shown for example in French Patent specification 1250217 are particularly useful in situations where it would not be possible to clean the lamp or other unit at the top of the tiltable section by conventional means.

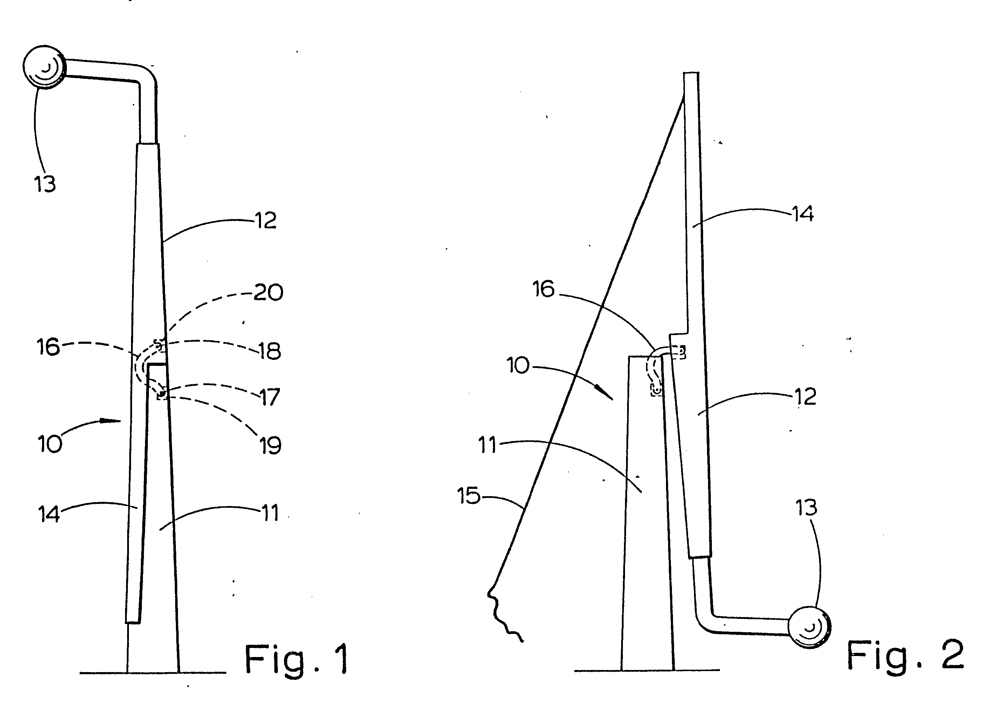

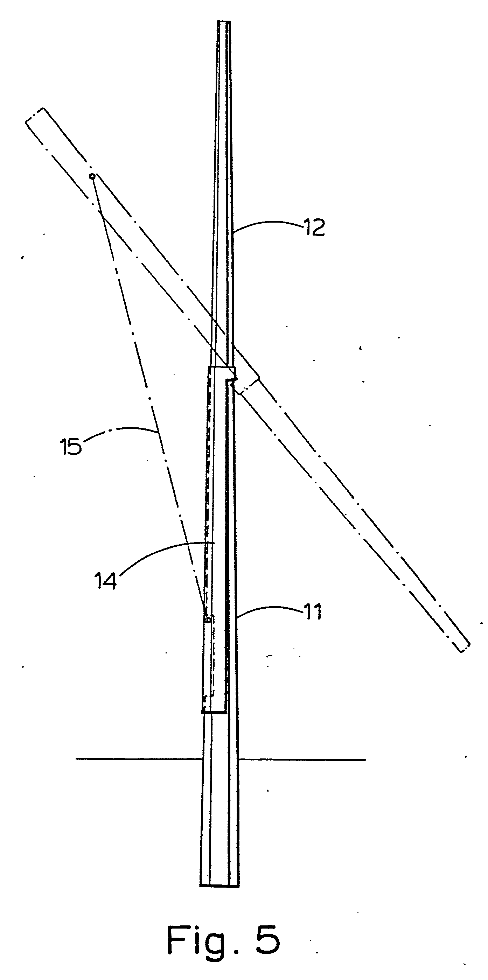

One of the problems with such columns has been that their appearance is not normally so elegant as normal columns which do not include a tiltable section. Thus for example in Figure 5 of French Patent specification 1250217, the hinge is particularly obvious and protrudes from the otherwise elegant lines of the lighting column and in both figures 5 and 1 of French Patent specification 1250217 the hinge is exposed to the weather.

The present invention provides a column adapted for supporting a lamp or other unit comprising an upstanding vertical base section for mounting to the ground, and a vertical tiltable section, the tiltable section being hinged by hinge means to the base section adjacent the top of the base section and including a tail section which, when the tiltable section is in its normal upright position, extends parallel to, and alongside, the base section, the hinge means being adapted to allow the tiltable section to hinge through at least approximately 135° to a position in which the upper end of the tiltable section is adjacent ground level, characterised in that when the tiltable section is in the normal upright position, the hinge means is entirely within the base and tiltable section.

Thus the hinge is not visible as in normal constructions and this makes for a more elegant column. Furthermore, the hinge will not be exposed to the weather and this further overcomes problems with the conventional hinging arrangement.

In an unrelated field, GB Patent Specification 991963 shows a tube such as a surveyor's pole which has two parts hingable with respect to each other, the hinge being arranged inside the pole. However the hinge mechanism is mounted to a cylindrical member which can be slid within one section of the tube and clearly such an arrangement would not be suitable for use in a lighting column since it would be necessary to lift one tiltable section of the lighting column with respect to the other before the hinging could take place and the weight and height of the lighting column would prevent such an arrangement.

Preferably the cross section of the base section is closed so that the strength of the column is increased with respect to the arrangement shown in French specification 1250217 where the cross section of the base section is split in Figure 5.

The cross section of the tail section is preferably similar to part only of the cross section of the base section so that when the tiltable section 12 is in its normal upright position and the tail section extends parallel to, and alongside the base section, it appears to form part of the base section 11.

In a preferred arrangement the cross section of the base section is regular and is non-circular.

In a preferred arrangement the cross section of the base section is polygonal. Preferably the cross section of the base section and tiltable section are similar. In a preferred arrangment the base section and tiltable section are formed of folded sheet metal.

The hinge means may preferably take the form of an arm member which is pivotally connected to the base section. It may also be pivotally connected to the tiltable section. The arm is preferably not straight. In a preferred arrangement there may be provided two similar arms arranged parallel to one another and side by side. This improves the structural integrity of the joints between the two sections.

The arm may take a form such that the tiltable section may be tilted from a position in which it is generally colinear with the base section in its normal position through approximately 180° to a position in which it is parallel to and alongside the base section and upside down with respect to its normal position. It may be necessary to provide means for holding the tiltable section in such a position and this may be provided by means of a wire which extends from the lower end of the base section to the tiltable section.

When the tiltable section is upright in its normal position, the two sections preferably form a continuation of one another, that is, the two sections have the same cross section where they meet and, where applicable, have the same taper.

Preferred arrangements of the invention will now be described by way of example only and with reference to the accompanying drawings in which:

Figure 1 is a diagrammatic perspective view, partially in section, of a column according to the invention in its normal position.

Figure 2 is the column of Figure 1 shown in a second position in which the tiltable section has been pivoted through approximately 180°.

Figure 3 is an enlarged view of the joint between the base section and a tiltable section of the column of Figure 1 with a modified arm, the position shown corresponding to Figure 1.

Figure 4 is a view of the parts of Figure 3 but in a position corresponding to that of Figure 2, and,

Figure 5 is a diagrammatic perspective view of an alternative arrangement of column.

Referring to Figure 1 the column 10 comprises an upstanding vertical base section 11 of a height which, as is seen from Figure 1, is a substantial proportion of the length of the column and a vertical tiltable section 12. In the present embodiment the base section and tiltable section are each of the same closed cross section and are formed of folded sheet metal. The cross section is octagonal but other cross sections would of course be suitable.

The base section 11 is mounted uprightly to the ground and includes an access opening and door (not shown) including the normal control gear.

The tiltable section 12 carried adjacent its top end, in this case, a lamp unit 13 and downwarly depending from the joint between the base section 11 and tiltable section 12 is a tail section 14 of the tiltable section 12. The tail section 14 is of similar general cross section to the tiltable section 12 (although, of course, it is not complete) and is arranged to fit snugly alongside and parallel to the base section 11 and in the position shown in Figure 1. As the cross section is octagonal, the tail section 14 comprises five sides. The tail sections 14 acts as a waterproof cover for part of the joint between the base section 11 and tiltable section 12, but where the joint is not covered by the tail section 14 the tiltable section 12 carries a weatherproof strip of the same metal sheet welded thereto.

Adjacent the joint between the base section 11 and tiltable section 12, and within the two sections is mounted an arm 16 which is pivotally connected to both the base section 11 and tiltable section 12 by pivot pins 17, 18 mounted on suitable lugs 19, 20 within the base section 11 and tiltable section 12 respectively. The arm 16 is not straight but curved as is clear from Figure 1.

The bottom end of the tail section 14 of the tiltable section 12 includes (not shown) means for mounting a wire 15 and means for locking this bottom end of the tail section 14 to the base section 11.

When it is desired to clean the lamp unit 13, the lower end of the tail section 14 is unlocked from the base section 11 and the tail section 14 is pulled away from the base section 11 thereby pivoting the tiltable section 12. Disengagement of the base section 11 and tiltable section 12 is facilitated by the strip which acts as a pivot during the initial tilting. The tiltable section 12 is pivoted at a point, intermediate its ends, whereby it is generally counterbalanced but to control the pivotal movement of the tiltable section 12 the wire 15 is paid out. The pivoting of the tiltable section 12 continues until it reaches the position shown in Figure 2. It will be understood that to reach this position it is necessary for the arm 16 to pivot around the pin 17 in the base section 11 and for the tiltable section 12 to pivot around the pin 18. In this way the tiltable section is tilted to a position approximately 180° from its normal position whereby it is generally parallel to and alongside the base section 11 and upside down with respect to its normal position. The relative lengths of the parts are arranged such that in this position the lamp unit 13 is adjacent ground level and can be readily cleaned and serviced as required.

Moving the tiltable section 12 back to its normal position requires pulling on the wire 15 attached to the end of the tail section 14, the tiltable section 12 tilting about the pin 18 and the arm 16 pivoting about the pin 17 until the tiltable section 12 reaches the position shown in Figure 1.

It will be noticed that the hinging arrangement is entirely enclosed within the base section 11 and the tiltable section 12 and this makes for a neat appearance. Furthermore, the pins and other parts of the hinging arrangement are within the columns and therefore not subjected to weather and pollution which extends their life compared with the conventional arrangement of a simple pivot pin outside the two sections.

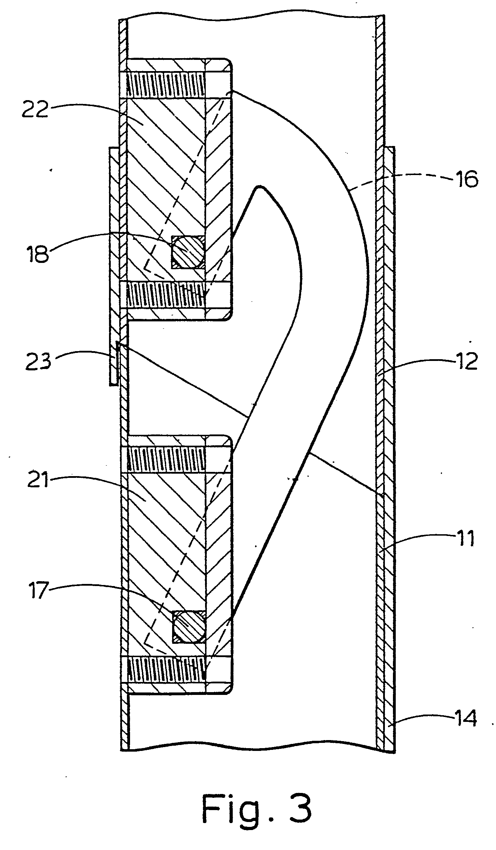

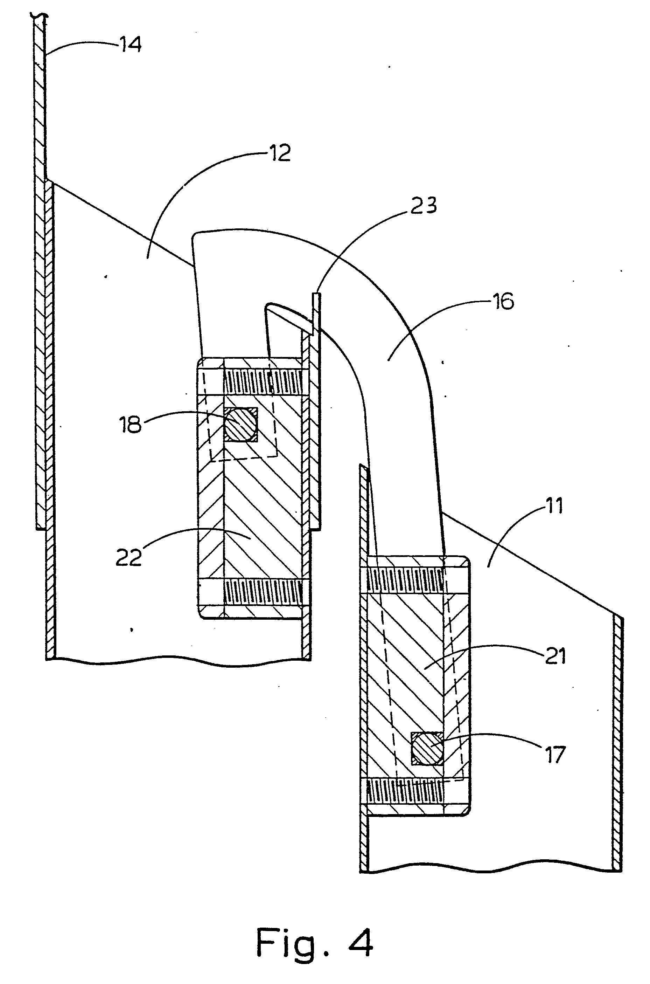

Figures 1 and 2 are generally diagrammatic and a generally similar arrangement is shown in Figure 3 and 4 in more detail. Figures 3 and 4 are vertical sections through the joint between the base section 11 and tiltable section 12. The same numbers have been used in Figures 3 and 4 for parts similar to those in Figures 1 and 2.

Thus the pins 17, 18 are mounted in the base and tiltable sections 11, 12 by means of support blocks 21, 22 welded to the inside of the respective sections and, although not clear from this drawing, the pivot pins 17, 18 protrude from each side of the support blocks 21, 22 thereby allowing the use of two identical parallel arms 16. This provides greater structural strength in the joint.

The arms 16 are a somewhat different shape to that shown in Figures 1 and 2 although still curved. The exact shape of the arm 16 is clear from the Figure.

It is also clear from Figures 3 and 4 that the upper end of the base section 11 is cut at an angle and there is a corresponding angle at the lower end of the tiltable section 12. Although not shown in this drawing there is provided an overlapping weather strip between the tiltable section and base section 11 to prevent the ingress of water into the column. Figure 3 corresponds to the position shown in Figure 1 and Figure 4 corresponds to the position shown in Figure 2 (although they are of course mirror images of one another).

Figure 5 shows an alternative type of column. The hinging arrangement is generally similar. The relative lengths of the base section 11 and tiltable section 12 are different (the base section 11 being shorter relative to that shown in Figures 1 and 2) so that it is not possible for the tiltable section 12 to rotate through approximately 180° without touching the ground. In this case the maximum pivoting of the tiltable section 12 is through approximately 135° and the tiltable section is restrained from further movement by the wire 15 which is fixed to the lower end of the base section 11. When not in use the wire 23 is retracted into a suitable aperture such as the aperture for the control gear in the base section 11 and is out of sight in normal use.

The invention is not restricted to the details of the foregoing example.

## Claims

1. A column (10) adapted for supporting a lamp (13) or other unit comprising an upstanding vertical base section (11) for mounting to the ground, and a vertical tiltable section (12), the tiltable section (12) being hinged by hinge means (16 to 20) to the base section (11) adjacent the top of the base section (11) and including a tail section (14) which, when the tiltable section (12) is in its normal upright position, extends parallel to, and alongside, the base section (11), the hinge means (16 to 20) being adapted to allow the tiltable section (12) to hinge through at least approximately 135° to a position in which the upper end of the tiltable section (12) is adajcent ground level, characterised in that when the tiltable section (12) is in the normal upright position, the hinge means (16 to 20) is entirely within the base and tiltable sections (11, 12).

2. A column as claimed in claim 1 characterised in that the cross section of the base section (11) is closed.

3. A column as claimed in claim 2 characterised in that the cross section of the tail section (14) is similar to part only of the cross section of the base section (11) so that when the tiltable section (12) is in its normal upright position and the tail section (14) extends parallel to, and alongside the base section (11) it appears to form part of the base section (11).

4. A column as claimed in any of claims 1 to 3 characterised in that the cross section of the base section is regular and is non-circular.

5. A column as claimed in claim 4 characterised in that the cross section of the base section is polygonal.

6. A column as claimed in claim 1 to 5, characterised in that the cross section of the base section (11) and tiltable section (12) are similar.

7. A column as claimed in' any of claims 1 to 6 characterised in that the base section (11) and tiltable section (12) are formed of folded sheet metal.

8. A column as claimed in any of claims 1 to 7 characterised in that the hinge means (16) to (20) comprises an arm member (16) which is pivotally connected to the base section (11).

9. A column as claimed in claim 8 characterised in that there are provided two arm members (16) of similar construction arranged parallel to one another and side by side.

10. A column as claimed in claim 8 or 9 characterised in that the arm member (16) or arm members (16) is/are pivotally connected to the tiltable section (12).

11. A column as claimed in any of claims 8 to 10 characterised in that the arm member (16) or arm members (16) is/are not straight.

12. A column as claimed in any of claims 1 to 11 characterised in that the hinge means (16 to 20) is of such a form that the tiltable section (12) may be tilted from a position in which it is generally colinear with the base section (11) in its normal position through approximately 180° to a position in which it is parallel to and along side the base section (11) and upside down with respect to its normal position.

13. A column as claimed in any of claims 1 to 12 characterised in that means (15) is provided for holding the tiltable section (12) in a position adjacent the ground.

14. A column as claimed in claim 13 characterised in that the means (15) for holding the tiltable section adjacent the ground comprises a wire (15) which extends from the lower end of the base section (11) to the tiltable section (12).

15. A column as claimed in any of claims 1 to 14 characterised in that, when the tiltable section (12) is upright in its normal position, the two sections (11, 12) form a continuation of one another and the two sections (11, 12) have the same cross section where they meet.

## Revendications

1. Pylône (10) prévu pour supporter une lampe (13) ou un autre dispositif, qui comporte une partie de base verticale dressée debout (11) prévue pour être montée sur le sol, et une partie verticale pouvant basculer (12), la partie pouvant basculer (12) étant articulée par un dispositif d'articulation (16 à 20) à la partie de base (11), au voisinage de la partie supérieure de celle-ci (11), et étant munie d'une partie de queue (14) qui, lorsque la partie pouvant basculer (12) se trouve dans la position normale, dressée vers le haut, est parallèle à la partie de base (11), et longe celle-ci, le dispositif d'articulation (16 à 20°) étant prévu pour permettre à la partie pouvant basculer (12) de pivoter d'un angle d'au moins 135° environ pour prendre une position pour laquelle l'extrémité supérieure de cette partie pouvant basculer (12) se trouvera au voisinage du niveau du sol, le pylône étant caractérisé en ce que lorsque la partie pouvant basculer (12) se trouve dans la position normale, dressée vers le haut, le dispositif d'articulation (16 à 20) est contenu entièrement à l'intérieur de la partie de base (11) et de la partie pouvant basculer (12).

2. Pylône suivant la revendication 1, caractérisé en ce que la section transversale de la partie de base (11) est fermée.

3. Pylône suivant la revendication 2, caractérisé en ce que le section transversale de la partie de queue (14) est semblable à une partie seulement de la section transversale de la partie de base (11), de telle sorte que lorsque la partie pouvant basculer (12) se trouve dans sa position normale, c'est-à-dire dressée vers la haut, et que la partie de queue (14) est parallèle à la partie de base (11) et longe cette partie de base (11), la partie de queue semble faire partie de la partie de base (11).

4. Pylône suivant l'une quelconque des revendications 1 à 3, caractérisé en ce que la section transversale de la partie de base est régulière et n'est pas circulaire.

5. Pylône suivant la revendication 4, caractérisé en ce que la section transversale de la partie de base et polygonale.

6. Pylône suivant les revendications 1 à 5, caractérisé en ce que la section transversale de la partie de base (11) et celle de la partie pouvant basculer (12) sont semblables.

7. Pylône suivant l'une quelconque des revendications 1 à 6, caractérisé en ce que la partie de base (11) et la partie pouvant basculer (12) sont faites de métal en feuille plié.

8. Pylône suivant l'une quelconque des revendications 1 à 7, caractérisé en ce que le dispositif d'articulation (16 à 20) comporte un élément de bras (16) qui est relié à la partie de base (11) de façon à pouvoir pivoter.

9. Pylône suivant la revendication 8, caractérisé en ce qu'il est prévu deux éléments de bras (16) de construction semblable qui sont montes parallélément l'un à l'autre et qui sont disposés l'un à côté de l'autre.

10. Pylône suivant l'une ou l'autre des revendications 8 et 9, caractérisé en ce que l'élément de bras (16) ou les éléments de bras (16) sont reliés, de façon à pouvoir pivoter, à la partie pouvant basculer (12).

11. Pylône suivant l'une quelconque des revendications 8 à 10, caractérisé en ce que l'élément de bras (16) ou les éléments de bras (16) ne sont pas rectilignes.

12. Pylône suivant l'une quelconque des revendications 1 à 11, caractérisé en ce que le dispositif d'articulation (16 à 20) est prévu sous une forme telle que l'on puisse faire basculer la partie pouvant basculer (12) d'environ 180° de façon à la faire passer d'une position dans laquelle elle se trouve dans l'ensemble en alignement avec la partie de base (11), position qui est sa position normale, à une position dans laquelle elle sera parallèle à la partie de base (11) et longera celle-ci et dans laquelle elle se trouvera le haut en bas par rapport à sa position normale.

13. Pylône suivant l'une quelconque des revendications 1 à 12, caractérisé en ce qu'il est muni d'un dispositif (15) destiné à maintenir la partie pouvant basculer (12) dans une position voisine du sol.

14. Pylône suivant la revendication 13, caractérisé en ce que le dispositif (15) qui est destiné à maintenir la partie pouvant basculer (12) au voisinage du sol est constitué par un fil (15) qui va de l'extrémité inférieure de la partie de base (11) à la partie pouvant basculer (12).

15. Pylône suivant l'une quelconque des revendications 1 à 14, caractérisé en ce que lorsque la partie pouvant basculer (12) est dressée vers le haut, c'est-à-dire qu'elle se trouve dans sa position normale, les deux parties (11 et 12) du pylône forment la continuation l'une de l'autre, et en ce que les deux parties (11 et 12) présentent la même section transversale à l'endroit où elles se rencontrent.

## Patentansprüche

1. Mast (10) zur Halterung einer Lampe (13) oder einer anderen Einheit, mit einem hochstehenden vertikalen Sockelabschnitt (11) zur Anbringung auf dem Boden und mit einem vertikalen kippbaren Abschnitt (12), wobei der kippbare Abschnitt (12) mittels eines Gelenkes (16 bis 20) nahe dem oberen Ende des Sockelabschnittes (11) an denselben angelenkt ist und einen Schwanzabschnitt (14) aufweist, der sich, wenn sich der kippbare Abschnitt (12) in seiner normalen aufgerichteten Position befindet, parallel zu und entlang dem Sockelabschnitt (11) erstreckt, wobei das Gelenk (16 bis 20) so ausgebildet ist, daß der kippbare Abschnitt (12) über wenigstens etwa 135° in eine Position verschwenkt werden kann, in welcher sich das obere Ende des kippbaren Abschnittes (12) nahe der Bodenoberfläche befindet, dadurch gekennzeichnet, daß, wenn sich der kippbare Abschnitt (12) in seiner normalen aufgerichteten Position befindet, das Gelenk (16 bis 20) vollständig innerhalb des Sockelabschnittes und des kippbaren Abschnittes (11, 12) liegt.

2. Mast nach Anspruch 1, dadurch gekennzeichnet, daß der Sockelabschnitt (11) einen geschlossenen Querschnitt aufweist.

3. Mast nach Anspruch 2, dadurch gekennzeichnet, daß der Querschnitt des Schwanzabschnittes (14) nur teilweise dem Querschnitt des Sockelabschnittes (11) ähnlich ist, so daß, wenn sich der kippbare Abschnitt (12) in seiner normalen aufgerichteten Position befindet und der Schwanzabschnitt (14) sich parallel und entlang einer Seite des Sockelabschnittes erstreckt, er einen Teil des Sockelabschnittes (11) zu bilden scheint.

4. Mast nach einem der Ansprüche 1 bis 3, dadurch gekennzeichnet, daß der Querschnitt des Sockelabschnittes reglemäßig und nicht kreisförmig ist.

5. Mast nach Anspruch 4, dadurch gekennzeichnet, daß der Querschnitt des Sockelabschnittes vieleckig ist.

6. Mast nach einem der Ansprüche 1 bis 5, dadurch gekennzeichnet, daß die Querschnitte des Sockelabschnittes (11) und des kippbaren Abschnittes (12) einander ähnlich sind.

**0 026 634**

7. Mast nach einem der Ansprüche 1 bis 6, dadurch gekennzeichnet, daß der Sockelabschnitt (11) und der kippbare Abschnitt (12) aus gebogenem Blech geformt sind.

8. Mast nach einem der Ansprüche 1 bis 7, dadurch gekennzeichnet, daß das Gelenk (16 bis 20) einem Arm (16) aufweist, der schwenkbar am Sockelabschnitt (11) angebracht ist.

9. Mast nach Anspruch 8, dadurch gekennzeichnet, daß zwei Arme (16) ähnlicher, Konstruktion vorgesehen sind, die parallel nebeneinander liegen.

10. Mast nach Anspruch 8 oder 9, dadurch gekennzeichnet, daß der Arm (16) oder die Arme (16) schwenkbar am kippbaren Abschnitt (12) angebracht ist bzw. sind.

11. Mast nach einem der Ansprüche 8 bis 10, dadurch gekennzeichnet, daß der Arm (16) oder die Arme (16) nicht gerade ist bzw. sind.

12. Mast nach einem der Ansprüche 1 bis 11, dadurch gekennzeichnet, daß das Gelenk (16 bis 20) eine derartige Form aufweist, daß der kippbare Abschnitt (12) aus einer Position, in der er in seiner normalen Position im wesentlichen kolinear zum Sockelabschnitt (11) liegt, um einen Winkel von etwa 180° in eine Position zu verschwenken ist, in der er parallel zu und an einer Seite des Sockelabschnittes (11) liegt und gegenüber der normalen Position auf dem Kopf steht.

13. Mast nach einem der Ansprüche 1 bis 12, dadurch gekennzeichnet, daß eine Einrichtung (15) vorgeshen ist, um den kippbaren Abschnitt (12) in einer Position nahe dem Boden zu halten.

14. Mast nach Anspruch 13, dadurch gekennzeichnet, daß die Einrichtung (15) zum Halten des kippbaren Abschnittes nahe dem Boden einen Draht (15) aufweist, der sich vom unteren Ende des Sockelabschnittes (11) sum kippbaren Abschnitt (12) erstreckt.

15. Mast nach einem der Ansprüche 1 bis 14, dadurch gekennzeichnet, daß, wenn der kippbare Abschnitt (12) sich in seiner aufgerichteten normalen Position befindet, die beiden Abschnitte (11, 12) gegenseitig eine Fortsetzung bilden und daß die beiden Abschnitte (11, 12) dort, wo sie zusammentreffen, denselben Querschnitt haben.

Fig. 1

Fig. 2

0 026 634

Fig. 3

Fig. 4

Fig. 5